# EUROPEAN PATENT APPLICATION

(11) **EP 2 879 132 A1**
(43) Date of publication of application: **03.06.2015**
(21) Application number: 14194058.5
(22) Date of filing: 20.11.2014
(51) Int. Cl.: G21C 5/10, G21C 13/024

(54) **A shroud support apparatus and a method of reforming a shroud support apparatus**

(30) Priority: 29.11.2013 JP 2013247822
(71) Applicant: Kabushiki Kaisha Toshiba, Minato-ku Tokyo 105-8001 (JP)
(72) Inventor: Shinkawa, Yoshihide, TOKYO, 105-8001 (JP); Adachi, Hiroyuki, TOKYO, 105-8001 (JP); Kinugasa, Kunihiko, TOKYO, 105-8001 (JP); Shimazu, Tadaaki, TOKYO, 105-8001 (JP); Hata, Haruhiko, TOKYO, 105-8001 (JP)
(74) Representative: Willquist, Sofia Ellinor

(57) **Abstract**

According to an embodiment, a shroud support apparatus is arranged along the outer periphery of a shroud (2) in a reactor pressure vessel (1). The shroud support apparatus has: support rods (11) arranged to stand in vertical direction in an annular section (5) formed between an inner surface of the reactor pressure vessel (1) and an outer surface of the shroud (2), bound to a baffle plate (3) at lower binding sections (11a), and extending upward; upper restraints (12) arranged so as to be bound to upper binding sections (11b) of the support rods (11) in order to restrain top end of the shroud (2); and a load reducing member attached to each support rod (11) so as to reduce the load applied to each support rod (11) when an earthquake takes place.

## Description

### FIELD

Embodiments described herein relate generally to a shroud support apparatus and a method of reforming a shroud support apparatus.

### BACKGROUND

In the reactor pressure vessel of a boiling water type nuclear reactor, a shroud is arranged as a structure. The shroud is provided with support rods that are to be used, whenever necessary, to repair the shroud. The support rods are arranged for the purpose of maintaining the function of the shroud by the binding force of the support rods in a state where all the circumferential welded sections in the shroud are broken along the entire circumference thereof.

The support rods are arranged between the inner surface of the reactor pressure vessel and the outer surface of the shroud as viewed in radial directions. The support rods are arranged between mutually adjacently located jet pumps as viewed in circumferential directions. And the support rods are arranged between a top section of the shroud and the baffle plate of the reactor pressure vessel as viewed in the vertical direction. The support rods bind, or link, the shroud top section and the baffle plate.

Additionally, members for restricting horizontal moves of the shroud are attached to the support rods for the purpose of maintaining the function of the shroud in a state where all the circumferential welded sections in the shroud are broken along the entire circumference thereof.

Since the support rods are arranged in a narrow section in the above-described manner, it is difficult to increase the cross-sectional area of each of the support rods in order to improve the stiffness of the support rod. And each of the support rods has an elongated shape and is supported at a relatively small number of support points. As a result, the support rods are liable to be influenced by earthquakes. Technologies using support rods are known, fitting support rods and preventing a shroud from being torn apart when the shroud is cracked. But, these technologies are not developed from the viewpoint of improving the resistance against earthquakes of a shroud.

### PRIOR ART DOCUMENT

### PATENT DOCUMENT

[PATENT DOCUMENT 1]: US Patent No. 5,402,570

The requirements of earthquake loads to be born in the seismic-resistant design of a nuclear power plant have become increasingly large in recent years. So, the current requirements for earthquake loads may have become significantly larger if compared with the requirements at the time when an existing shroud support apparatus was designed. Therefore, there may be instances where the stress on the basis of currently affected earthquake condition is too large so that it is difficult to secure the initial margin of seismic-resistance of the shroud support apparatus.

When reinforcement or replacement is executed for the purpose of reducing the generated stress in order to secure the necessary earthquake resistance margin, there arises a difficulty of getting higher degree stiffness by increasing the cross-sectional area thereof because of various restrictions by surrounding structures.

### BRIEF DESCRIPTION OF THE DRAWINGS

FIG. 1 is a schematic horizontal sectional view of shroud support apparatus according to a first embodiment, illustrating configuration in a reactor pressure vessel;
FIG. 2 is a schematic sectional elevation view of shroud support apparatus according to a first embodiment of FIG.1 as viewed in the direction of arrow II, illustrating configuration in a reactor pressure vessel;
FIG. 3 is a schematic sectional elevation view of shroud support apparatus according to a first embodiment of FIG.1 as viewed in the direction of arrow III, illustrating configuration in a reactor pressure vessel;
FIG. 4 is a graph illustrating the effect of the shroud support apparatus according to the first embodiment;
FIG. 5 is a flowchart showing the flow of a process of executing the shroud support apparatus reforming method according to the first embodiment;
FIGS. 6A and 6B are schematic perspective views of a support rod, illustrating an operation of attaching a weight to the support rod by means of the shroud support apparatus reforming method of the first embodiment. FIG. 6A shows a state where the operation of attaching the weight to the support rod is on the way, while FIG. 6B shows a state where the operation of attaching the weight to the weight to the support rod is finished;
FIG. 7 is a schematic sectional elevation view of shroud support apparatus according to a second embodiment, illustrating configuration in a reactor pressure vessel;
FIG. 8 is a graph illustrating the effect of the shroud support apparatus according to the second embodiment;
FIG. 9 is a schematic sectional elevation view of shroud support apparatus according to a third embodiment, illustrating configuration in a reactor pressure vessel;
FIG. 10 is a schematic horizontal sectional view of shroud support apparatus according to a third embodiment, illustrating configuration in a reactor pressure vessel;
FIG. 11 is a schematic sectional elevation view of shroud support apparatus according to a fourth embodiment, illustrating configuration in a reactor pressure vessel; and
FIG. 12 is a schematic horizontal sectional view of shroud support apparatus according to a fourth embodiment, illustrating configuration in a reactor pressure vessel.

### DETAILED DESCRIPTION

In view of the above-identified problems, therefore, the object of an embodiment of the present invention is to secure the necessary degree of earthquake resistance margin of a support rod, while minimizing the influence on the structures located around it.

According to an embodiment, there is provided a shroud support apparatus having a shroud support mechanism arranged along outer periphery of a shroud in a reactor pressure vessel, wherein the shroud support mechanism comprises: support rods arranged to stand in vertical direction in an annular section formed between an inner surface of the reactor pressure vessel and an outer surface of the shroud, bound to a baffle plate in the reactor pressure vessel at lower binding sections of support rods, and extending upward; upper restraints arranged so as to be bound to upper binding sections of the support rods at top ends of the support rods in order to restrain the top end of the shroud; and a load reducing member attached to each support rod so as to reduce load applied to each support rod when an earthquake takes place.

According to another embodiment, there is provided a method of reforming a shroud support apparatus having support rods bound to a baffle plate in a reactor pressure vessel at lower binding sections of the support rods and connected upper restraints bound to upper binding sections of the support rods at top ends of the support rods so as to retrain the top end of a shroud in the reactor pressure vessel, wherein lowering each of load reducing members held in suspension, having a clamp section composed of a plurality of parts, in a state where the clamp section is open, to the vicinity of an attaching area of the corresponding support rod from above in the reactor pressure vessel, and fixing each of the load reducing members to the corresponding support rod by closing the clamp section and subsequently rigidly securing each of the load reducing members to each support rod.

The following describes a shroud support apparatus and a method of reforming a shroud support apparatus according to embodiments of the present invention, with reference to the accompanying drawings. The same, or similar, portions are represented by the same reference symbols, and duplicate descriptions will be omitted.

### [FIRST EMBODIMENT]

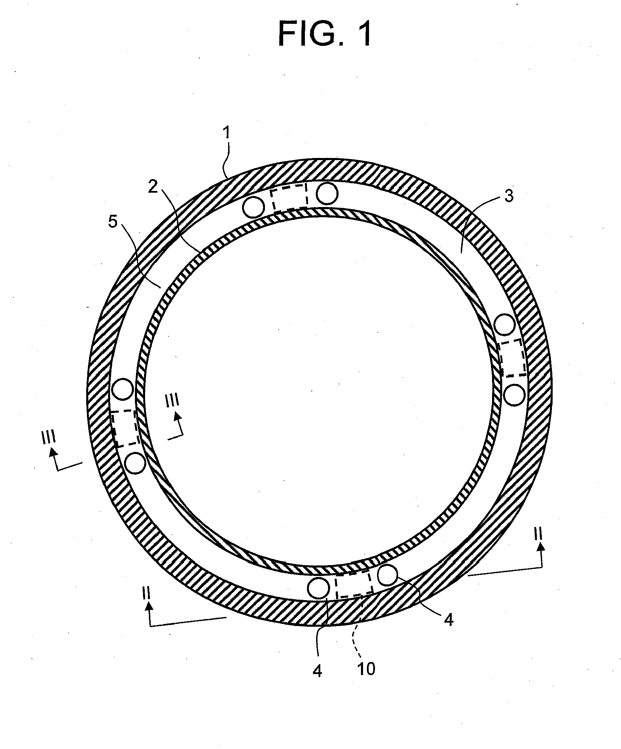

FIG. 1 is a schematic horizontal sectional view of shroud support apparatus according to a first embodiment, illustrating configuration in a reactor pressure vessel. The reactor pressure vessel 1 has a cylindrical profile whose axis extends vertically and includes top and bottom mirror plates. Shroud 2 that is arranged in the inside of the reactor pressure vessel 1 is provided in order to securely exert the function of supporting the core fuel, the function of operating as a partition wall for forming a flow route in the reactor pressure vessel 1 and the function of keeping the fuel submerged in water in loss of coolant accident. Annular section 5 is formed between the inner surface side of the reactor pressure vessel 1 and the outer surface side of the shroud 2. The shroud support apparatus is arranged in the annular section 5. The shroud support apparatus has four shroud support mechanisms 10 arranged at respective four positions that are disposed at circumferentially regular intervals.

Each shroud support mechanism 10 is arranged between two circumferentially adjacently installed jet pumps 4. While a number of jet pumps are arranged along the outer periphery of the shroud, it should be noted that jet pumps 4 are schematically shown in FIG. 1 at the diffuser positions located adjacent to the shroud support mechanisms 10.

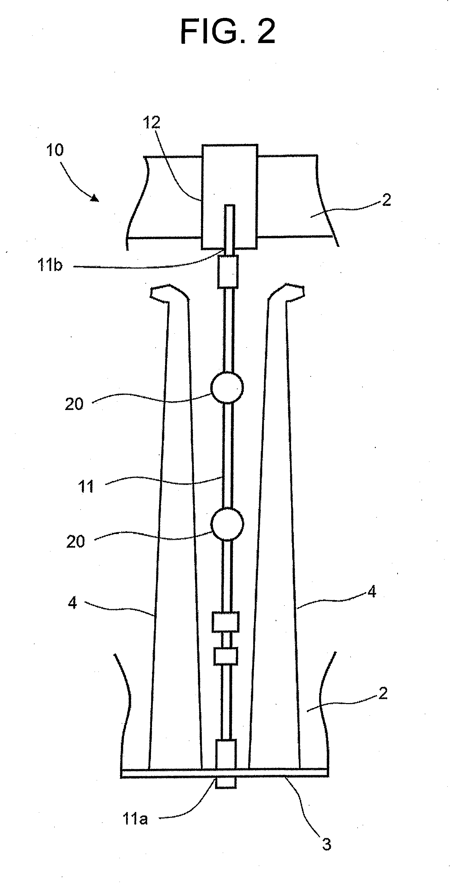

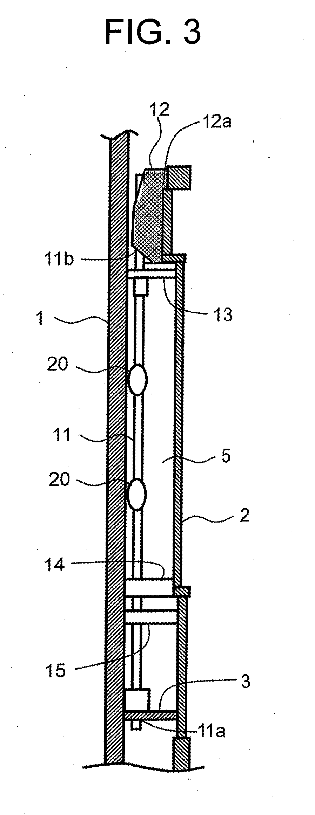

FIG. 2 is a schematic sectional elevation view of shroud support apparatus according to a first embodiment of FIG.1 as viewed in the direction of arrow II, illustrating configuration in a reactor pressure vessel. FIG. 3 is a schematic sectional elevation view of shroud support apparatus according to the first embodiment of FIG. 1 as viewed in the direction of arrow III, illustrating configuration in a reactor pressure vessel. Each shroud support mechanism 10 is arranged between two jet pumps 4 that are located at both sides of the shroud support mechanism 10. The jet pumps 4 are mounted on baffle plate 3 so as to flow out the reactor coolant in the annular section 5 (FIG. 1) into the space under the baffle plate 3.

Each shroud support mechanism 10 has a vertically extending support rod 11, an upper restraint 12 and two weights 20 for adjusting the natural frequency of the support rod 11. The support rod 11 is bound to the baffle plate 3 at the lower binding section 11a located at the bottom thereof. At the lower binding section 11a, the support rod 11 runs through the baffle plate 3 and pinned at the part thereof that projects downward from the baffle plate 3. Then, as a result, the support rod 11 is bound to the baffle plate 3.

On the other hand, the support rod 11 is bound at the upper binding section 11b thereof to the upper restraint 12 that is arranged at the top of the support rod 11. At the upper binding section 11b, the support rod 11 runs through the upper restraint 12 and rigidly secured to the upper restraint 12 by means of a fixture. Thus, as a result, the support rod 11 is bound to the upper restraint 12.

The upper restraint 12 is a block whose horizontal cross section is substantially rectangular at the substantially middle section thereof as viewed in the height direction. The upper restraint 12 is so formed that its first surface facing the inner surface of the reactor pressure vessel 1 is parallel to the inner surface of the reactor pressure vessel 1. The second surface opposite to the first surface of the upper restraint 12 faces the outer surface of the shroud 2 and is formed parallel with the outer surface of the shroud 2. The top end of the upper restraint 12 is made to overhang the top end of the cylindrical part of the shroud 2. Thus, the upper restraint 12 is so formed as to restrain the shroud 2 vertically downwardly by means of its overhanging section 12a.

In this way, the shroud 2 is vertically compressed by the lower binding sections 11a for binding the support rods 11 and the baffle plate 3 together, the support rods 11, the upper binding sections 11b for binding the support rods 11 and the upper restraints 12 together and the overhanging sections 12a of the upper restraints 12 overhanging the top end of the cylindrical part of the shroud 2. In this way vertical compressive force is applied to the shroud 2.

The upper restraints 12 also have a function of restraining horizontal moves of the shroud 2 in order to maintain the function of the shroud 2 in a state where all the circumferential welded sections of the shroud 2 are broken totally along the circumference of the shroud. Furthermore, an upper restraint 12, an upper limit stop 13, a lower restraint 14 and a lower limit stop 15 are attached to each of the support rods 11 in order to restrain horizontal moves of a lower part of the shroud 2.

In each shroud support mechanism 10, two weights 20 are attached to the support rod 11 at positions that are vertically spaced apart each other by a certain distance. The weights 20 are substantially globular. While each shroud support mechanism 10 has two weights 20 in the above description, the number of weights of each shroud support mechanism 10 is not necessarily limited to two. For example, each shroud support mechanism 10 may alternatively has only a single weight or three or more than three weights. Likewise, while the weights 20 are substantially globular in the above description, they may not necessarily be limited to be globular. For example, the weights 20 may alternatively be cuboidal. Still alternatively, they may have a more complex profile depending on the placement restrictions imposed on them.

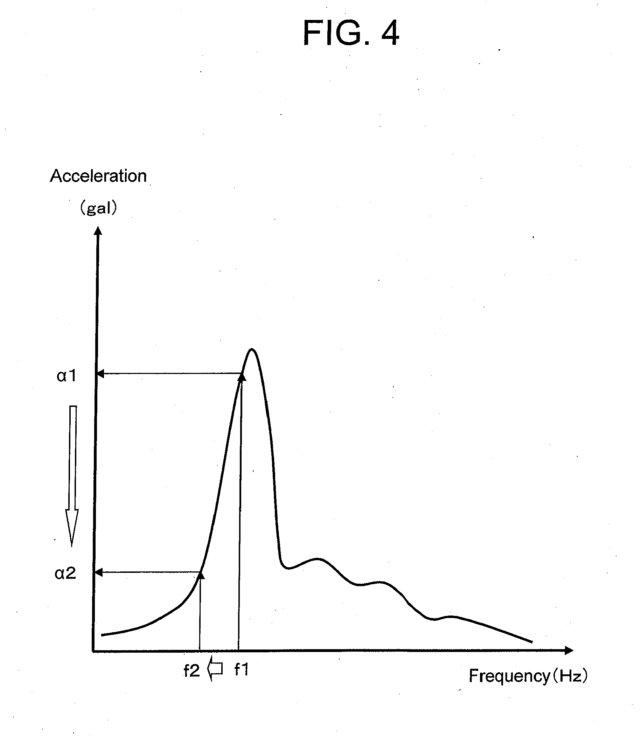

FIG. 4 is a graph illustrating the effect of the shroud support apparatus according to the first embodiment. In the graph of FIG. 4, the horizontal axis shows oscillation frequency (Hz) and the vertical axis shows acceleration (gal). The graph of FIG. 4 shows simulative spectral characteristics of acceleration (gal) of the reactor pressure vessel 1 and the intra-reactor structures that correspond to a predetermined earthquake motion (e.g., the earthquake motion used for evaluation at the time of designing). As shown in FIG. 4, a high acceleration value is observed when the natural frequency f1 of a shroud support mechanism 10 that is not provided with one or more than one weights 20 is within the peak range of the acceleration spectrum. This means that the shroud support mechanism 10 resonates with a predetermined earthquake so that the shroud support mechanism 10 is subjected to a heavy load.

On the other hand, by adding weight 20 as load-reducing body to the shroud support mechanism 10, the natural frequency of the shroud support mechanism 10 shifts to f2, which is out of the peak range of the acceleration spectrum. And, the acceleration of the shroud support mechanism 10 due to a predetermined earthquake motion can be decreased from α1 to α2. Then, as a result, shroud support mechanism 10 of the shroud support apparatus is prevented from resonating with the earthquake motion when an earthquake takes place. Thus, the earthquake load is reduced.

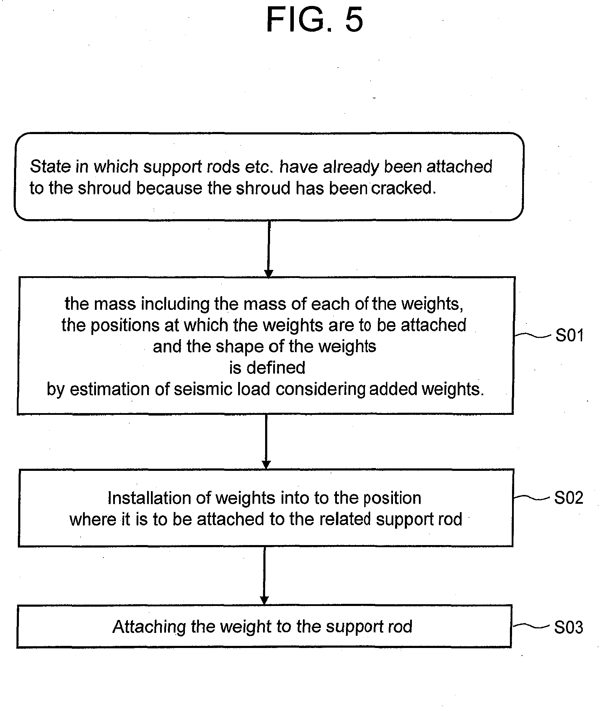

FIG. 5 is a flowchart showing the flow of a process of executing the shroud support apparatus reforming method according to the first embodiment. More specifically, FIG. 5 shows the procedure to reinforce the shroud support mechanism 10 in a nuclear power plant which has experienced operation, and in which support rods 11 and the upper restraint 12 have already been attached to the shroud 2 because the shroud has been cracked. This process is executed while the plant is out of operation.

When it is determined that weights 20 need to be added to the shroud support apparatus, the specification of the mass including the mass of each of the weights, the positions at which the weights are to be attached and the shape of the weights is defined. Then, the natural frequency of the shroud support mechanisms 10 and the acceleration of the shroud support mechanisms 10 at that frequency are computed. As for the mass of each of the weights, the restrictive requirements to be met by the volume of the weight because of the various objects arranged around the weight attaching position need to be taken into consideration. Then, an operation of defining an additional specification and that of computation of the acceleration are repeated to determine an optimum specification for adding weights 20 (Step S01).

Then, each of the fabricated weights 20 that is held in suspension is lowered from above in the reactor pressure vessel 1 and brought to the position where it is to be attached to the related support rod 11 (Step S02). After the weight 20 is brought to the proper position, the weight 20 is attached to the support rod 11 by means of a fitting jig (Step S03). It is desirable to prepare a fitting jig that is designed so as to exclusively be used for the weights, taking the shape of the weights 20 and the plant design into consideration.

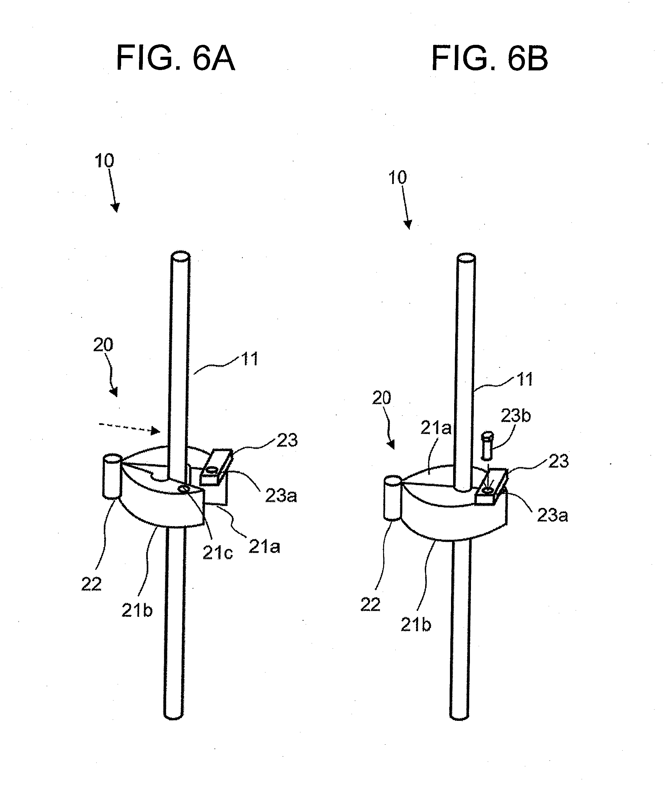

FIGS. 6A and 6B are schematic perspective views of a support rod 11, illustrating an operation of attaching a weight to the support rod 11 by means of the shroud support apparatus reforming method of the first embodiment. FIG. 6A shows a state where the operation of attaching the weight 20 to the support rod 11 is on the way, while FIG. 6B shows a state where the operation of attaching the weight 20 to the support rod 11 is finished. The weight 20 is formed by weight halves, including a first weight half 21a and a second weight half 21b. The first weight half 21a and the second weight half 21b are connected to each other by a hinge 22 such that they can be put together face to face.

In each of the first weight half 21a and the second weight half 21b, vertical semi-cylindrical grooves are formed at the center. When the first weight half 21a and the second weight half 21b are closed, the support rod 11 is fit in the vertical cylindrical hole produced by the semi-cylindrical grooves and can be held by them. Additionally, the first weight half 21a is provided in advance with a binding member 23 for binding the first weight half 21a and the second weight half 21b and tightly holding the support rod 11 between them when the support rod 11 is pinched between them. Furthermore, a bolt receiving (threaded) hole 23a is formed in the binding member 23. And in the second weight half 21b, a bolt receiving (threaded) hole 21c is formed at the position corresponding to the bolt receiving hole 23a.

As each of the weights 20 is brought close to the related weight attaching position, the first weight half 21a and the second weight half 21b of the weight 20 are horizontally put apart from each other, while they are connected to each other at the hinge 22. Then, the weight 20 is moved until the support rod 11 is located at the center of either the first weight half 21a or the second weight half 21b while they are held in the state of being put apart from each other (FIG. 6A). After moving the weight 20 to the position where it is to be attached to the support rod 11, the first weight half 21a and the second weight half 21b are closed and made to tightly pinch the support rod 11 between the first weight half 21a and the second weight half 21b by driving bolt 23b into the bolt receiving hole 23a of the binding member 23 and then into the bolt receiving hole 21c of the second weight half 21b. Thus, the weight 20 is rigidly secured to the support rod 11 (FIG. 6B).

While the first weight half 21a and the second weight half 21b are bound together by means of a binding member 23 in the above description, the method of tightly putting the two weight halves 21a and 21b together is not limited to the use of a binding member 23. Alternatively, for instance, the first weight half 21a may be provided with a projection and the second weigh half 21b may be provided with a recess, or vice versa, so that the first and second weight halves 21a and 21b may be bound together as a bolt is driven into the recess and the projection at a position where the projection and the recess overlap each other. Still alternatively, the first and second weight halves 21a and 21b may be bound together by a binding technique using a spring.

Thus, this embodiment can secure the necessary earthquake resistance margin, while minimizing the influence of the support rods to the structures surrounding them, in the above-described manner.

### [SECOND EMBODIMENT]

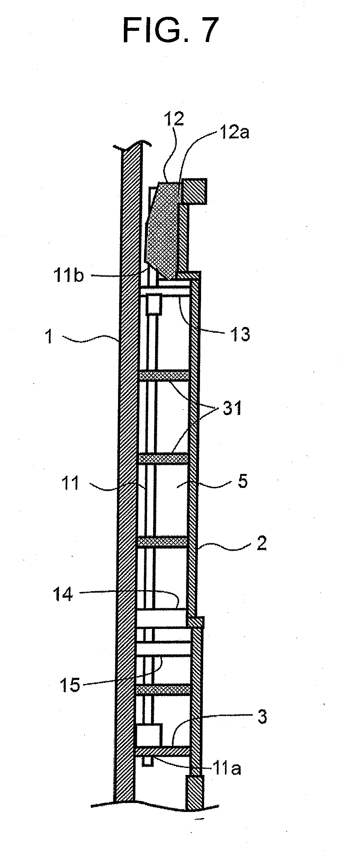

FIG. 7 is a schematic sectional elevation view of shroud support apparatus according to a second embodiment, illustrating configuration in a reactor pressure vessel. This embodiment is a variation of the first embodiment. Weights 20 are provided as load reducing members in the first embodiment. On the other hand, the shroud support mechanism 10 is provided with a plurality of support plates 31 as load reducing members, such that the support rod 11 is supported by the support plates 31 at reduced longitudinal intervals. In other words, support plates 31 are attached to each of the support rods 11 at intervals as viewed in the vertical direction.

Each support plate 31 is horizontally attached to the support rod 11. Support plates 31 are flat plates. The first side of the support plates 31 is formed with a profile that matches the profile of the inner surface of the reactor pressure vessel 1. And the first side is in contact with the inner surface of the reactor pressure vessel 1. The second side, or the other side of the support plate 31 opposite to the first side, is formed with a profile that matches the profile of the outer surface of the shroud 2. And a small clearances exist between the support plate 31 and the inner surface of the reactor pressure vessel 1, and between the support plate 31 and the outer surface of the shroud 2.

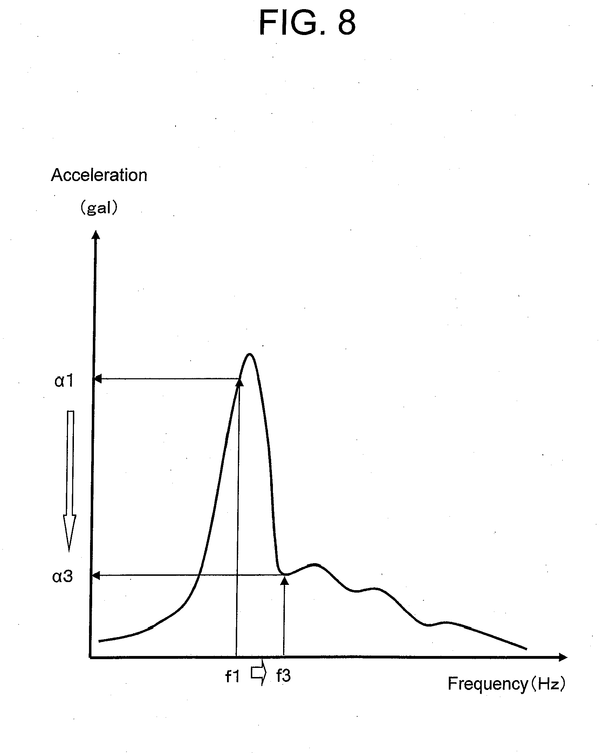

FIG. 8 is a graph illustrating the effect of the shroud support apparatus according to the second embodiment. As the shroud support apparatus of this embodiment is provided with support plates 31, the natural frequency (f3) of the shroud support mechanisms 10 becomes higher than that before the support plates 31 are added to them unlike the instance of adding weights 20 to the shroud support mechanisms 10 as in the first embodiment. However, the natural frequency of the shroud support mechanism 10 shifts out of the peak range of the acceleration spectrum as in the case of the first embodiment.

Since the support plates 31 are arranged so as to be held in contact with the inner surface of the reactor pressure vessel 1 and also with the outer surface of the shroud with a small clearance in this embodiment, the horizontal shift of the support rod 11 is limited and the load to which the support rod 11 is subjected is reduced.

Moreover, the load to which each shroud support mechanism 10 is subjected can be reduced by shifting the natural frequency of the shroud support mechanism 10 to the range where it does not resonate with earthquake motion.

### [THIRD EMBODIMENT]

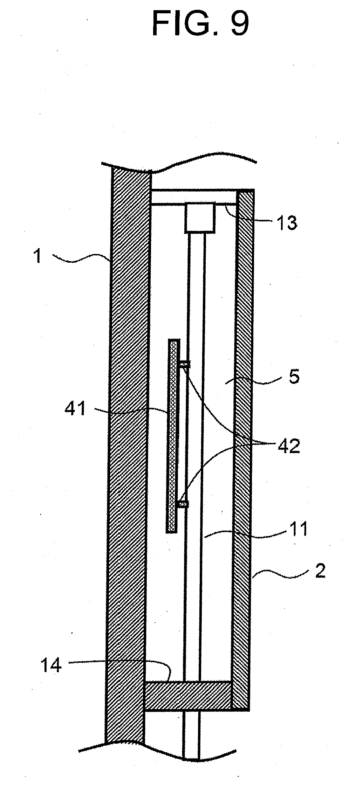

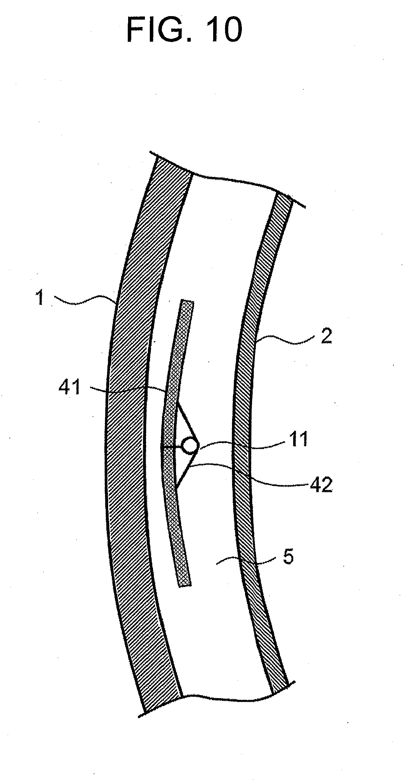

FIG. 9 is a schematic sectional elevation view of shroud support apparatus according to a third embodiment, illustrating configuration in a reactor pressure vessel. FIG. 10 is a schematic horizontal sectional view of shroud support apparatus according to a third embodiment, illustrating configuration in a reactor pressure vessel.

This embodiment is also a variation of the first embodiment. Weights 20 are provided as load reducing members in the first embodiment. In the third embodiment, on the other hand, the shroud support mechanisms 10 is provided with a fluid-rod interaction inducing member 41 as load reducing member.

The fluid-rod coupling member 41 is a plate member that is arranged in the annular section 5 so as to extend both in the vertical direction and in the circumferential direction. It is formed as a curved profile so as to extend along the inner surface of the reactor pressure vessel 1. The fluid-rod coupling member 41 is arranged at a position located close to the reactor pressure vessel 1 with a predetermined clearance to the reactor pressure vessel 1. The fluid-rod coupling member 41 is attached to the support rod 11 by way of brackets 42.

The gap between the fluid-rod coupling member 41 and the reactor pressure vessel 1 is normally filled with a liquid coolant. When an earthquake takes place, each of the support rods 11 and the related one of the fluid-rod coupling members 41 oscillate unitedly. At this time, the support rods 11 are coupled with the reactor pressure vessel 1 for oscillations by way of fluid due to provision of the fluid-rod coupling members 41. Then, as the support rods 11 are coupled with the reactor pressure vessel 1 for oscillations, the horizontal shift of each of the support rods 11 is limited so that consequently the load to which the support rod 11 is subjected is reduced.

Note that the profile of the fluid-rod coupling member 41 is not limited to the above-described one. In other words, the fluid-rod coupling member 41 may have any other profile so long as it performs above described function. That is, the area of the surface of the fluid-rod coupling member 41 that faces the reactor pressure vessel 1, its profile and the distance separating each of the fluid-rod coupling members 41 and the reactor pressure vessel 1 are properly defined in advance so as to exert the above-described function. For example, the surface of the fluid-rod coupling members 41 that faces the reactor pressure vessel 1 may not necessarily be a continuously curved surface and may alternatively be a surface that is produced by bending a flat surface at predetermined intervals. Still alternatively, the fluid-rod coupling member 41 may be divided into a plurality of pieces and attached to the related support rod 11.

### [FOURTH EMBODIMENT]

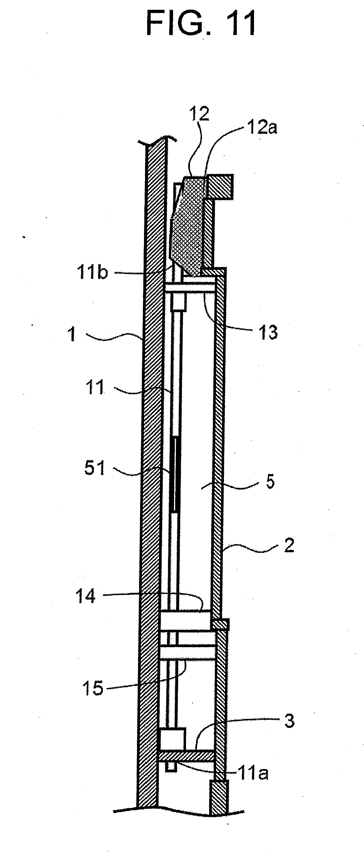

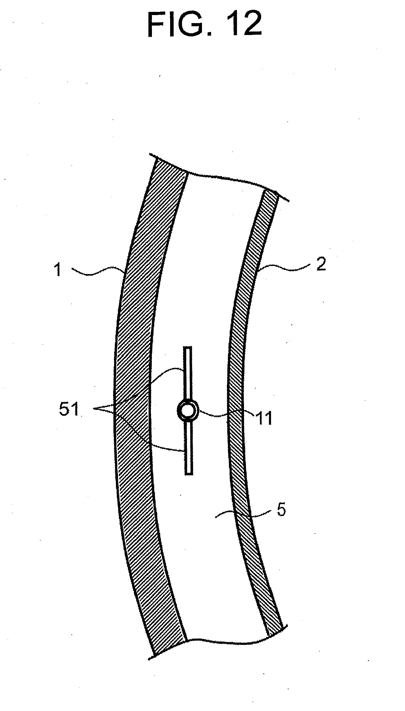

FIG. 11 is a schematic sectional elevation view of shroud support apparatus according to a fourth embodiment, illustrating configuration in a reactor pressure vessel. FIG. 12 is a schematic horizontal sectional view of shroud support apparatus according to a fourth embodiment, illustrating configuration in a reactor pressure vessel.

In this embodiment, a pair of wing-shaped member 51 is attached to each of the support rods 11. The wing-shaped member 51 is formed as a flat plate-like profile and extends vertically and circumferentially in the annular section 5.

The shroud support mechanisms 10 are immersed in the reactor coolant, which is the fluid filled in the annular section 5. Therefore, when an earthquake takes place, the resistance of the shroud support mechanism 10 against the surrounding fluid is increased by the wing-shaped member 51. As a result, when an earthquake takes place, the oscillations of the shroud support mechanisms 10 are limited by the resistance against fluid thereof due to the wing-shaped member 51, which are the load reducing members of this embodiment. Additionally, the oscillations attenuating effect due to the resistance against fluid is boosted and hence the oscillation of the shroud support mechanism 10 will be quickly attenuated in the event of an earthquake.

The size of wing-shaped member 51 is not limited to the above-described one. Likewise, the profile of the wing-shaped member 51 is not limited to the above-described one so long as they can satisfactorily increase the resistance of the shroud support mechanism 10 against the surrounding fluid. However, the mode of arrangement of the shroud support mechanism 10 is preferable to be above-described one, from the viewpoint of efficiently providing the effect with a limited additional mass and ease of arranging them, in the case of adding them to the shroud support mechanisms 10 that already exist in the nuclear reactor.

### [OTHER EMBODIMENTS]

Several embodiments of the present invention have been described above. However, those embodiments are described above only as exemplar embodiments without any intention of limiting the scope of the present invention. For instance, the first embodiment may be combined with the third embodiment and/or the fourth embodiment for use. Similarly, the second embodiment may be combined with the third embodiment and/or the fourth embodiment.

Furthermore, the procedure of the shroud support apparatus reforming method illustrated in FIG. 5 for the first embodiment is applicable to the second, to the third and to the fourth embodiment each. The method of attaching weights as load reducing members is illustrated in FIG. 5 for the first embodiment. Although not described, the parts of each of the load reducing members of each of the remaining embodiments that are to be used to secure the member to the related support rod 11 can also be realized as a clamp structure that can be secured to the support member in a manner as described above for the first embodiment.

Additionally, each of the above-described embodiments may be put to use in various different ways and, if appropriate, any of the components thereof may be omitted, replaced or altered in various different ways without departing from the spirit and scope of the invention.

Therefore, all the above-described embodiments and the modifications made to them are within the spirit and scope of the present invention, which is specifically defined by the appended claims, as well as their equivalents.

## Claims

1. A shroud support apparatus arranged along outer periphery of a shroud in a reactor pressure vessel, the apparatus comprising:
support rods (11) arranged to stand in vertical direction in an annular section (5) formed between an inner surface of the reactor pressure vessel (1) and an outer surface of the shroud (2), bound to a baffle plate (3) in the reactor pressure vessel (1) at lower binding sections (11a) of support rods (11), and extending upward;
upper restraints (12) arranged so as to be bound to upper binding sections (11b) of the support rods (11) at top ends of the support rods (11) in order to restrain the top end of the shroud (2); and
a load reducing member attached to each support rod (11) so as to reduce load applied to each support rod (11) when an earthquake takes place.

2. The apparatus according to claim 1, wherein the load reducing member includes a weight (20) attached to each support rod (11) located between the lower binding section (11a) and the upper binding section (11b) thereof.

3. The apparatus according to claim 1, wherein the load reducing member includes a support plate (31) attached to each support rod (11) located between the lower binding section (11a) and the upper binding section (11b) thereof so as to extend between the inner surface of the reactor pressure vessel (1) and the outer surface of the shroud (2).

4. The apparatus according to any one of claims 1 to 3, wherein the load reducing member includes a fluid-rod coupling member (41), wherein
the fluid-rod coupling member (41) has: a bracket (42) attached to the support rod (11) ; and a plate member supported by the bracket (42), arranged closer to the inner surface of the reactor pressure vessel (1) than the support rod (11), and having a surface facing to the reactor pressure vessel (1).

5. The apparatus according to any one of claims 1 to 4, wherein the load reducing member includes a flat plate arranged between the lower binding section (11a) and the upper binding section (11b) of the support rod (11) both in the circumferential direction and in the vertical direction in the annular section (5).

6. A method of reforming a shroud support apparatus having support rods (11) bound to a baffle plate (3) in a reactor pressure vessel (1) at lower binding sections (11a) of the support rods (11) and connected upper restraints (12) bound to upper binding sections (11b) of support rods (11) at top ends of the support rods (11) so as to retrain the top end of a shroud in the reactor pressure vessel (1), wherein
lowering each of load reducing members held in suspension, having a clamp section composed of a plurality of parts, in a state where the clamp section is open, to vicinity of an attaching area of the corresponding support rod (11) from above in the reactor pressure vessel (1), and
fixing each of the load reducing members to the corresponding support rod (11) by closing the clamp section and subsequently rigidly securing each of the load reducing members to each support rod (11).
